# EUROPEAN PATENT SPECIFICATION

(11) **EP 3 052 342 B1**
(45) Date of publication and mention of the grant of the patent: **15.11.2017**
(21) Application number: 14790762.0
(22) Date of filing: 03.10.2014
(51) Int. Cl.: B60R 1/074

(54) **MIRROR ADJUSTMENT DEVICE WITH PLAY SUPPRESSION**
SPIEGELEINSTELLUNGSVORRICHTUNG MIT SPIELUNTERDRÜCKUNG
DISPOSITIF DE RÉGLAGE DE MIROIR AVEC SUPPRESSION DE JEU

(30) Priority: 03.10.2013 NL 2011552
(43) Date of publication of application: 10.08.2016
(73) Proprietor: MCi (Mirror Controls International) Netherlands B.V., 3447 GK Woerden (NL)
(72) Inventor: VAN LEEUWEN, Sigrid Elizabeth, NL-3447 GK Woerden (NL); VERVOORN, Dennis Alexander, NL-3447 GK Woerden (NL); ROOSE, Marinus, NL-3447 GK Woerden (NL); VAN ZUILEN, Marinus Jacobus Maria, NL-3447 GK Woerden (NL); BROUWER, Stefan Frits, NL-3447 GK Woerden (NL)
(74) Representative: V.O.
(86) International application number: PCT/NL2014/050687
(87) International publication number: WO 2015/050453

(56) References cited:
- EP-A2- 2 055 530
- WO-A1-00/47445
- DE-A1- 19 513 970
- JP-A- S6 422 646
- US-B1- 6 564 666

## Description

The invention relates to a mirror adjustment device, in particular for a mirror housing on a motor vehicle, for instance as a part of a motor adjustable rear view mirror, such as an exterior mirror.

A mirror for a motor vehicle comprises a mirror foot and a mirror housing which can be rotated relative to each other about a pivot. The mirror foot serves for mounting to the motor vehicle. Via the pivot, the mirror housing is adjustably connected to the mirror foot, whereby the mirror housing is adjustable between a collapsed position, in which the mirror housing is situated substantially along the motor vehicle, and a folded out position, in which the mirror housing is situated substantially transversely to the motor vehicle.

The mirror adjustment device provides for electrical and manual adjustment of the mirror housing. Thus, an exterior mirror of a motor vehicle can be operated electrically but also be folded in manually. Damage to the exterior mirror can thus be prevented.

The mirror adjustment device includes an electric motor, a gear transmission and an output gear connected with the pivot. Further, the mirror adjustment device includes a housing which includes one or more bearing parts against which the gear transmission is supported. The gear transmission serves for transmitting the rotation of the electric motor to the output gear and hence to the pivot, whereby the output rotational speed of the electric motor is reduced to a pivoting speed appropriate for the mirror housing. In the gear transmission, drive elements such as one or more gears and/or one or more worms and/or one or more worm gears are included. The gear transmission includes for instance a worm gear assembly with a worm shaft, on which a worm (with a spirally running groove) and a worm gear are arranged. The exterior mirror is configured such that the mirror housing can be moved back and forth by manual adjustment. To that end, the output gear is disengageably connected with the pivot so that it is disengaged upon manual adjustment when the user exerts a substantial force on the mirror housing.

It has appeared that upon manual adjustment of the mirror housing, the user senses loose play. This is experienced as inconvenient. Another problem is that, with some exterior mirrors, during electric adjustment, the mirror cap adjusts within this play in a jerky manner, i.e., judder occurs. This occurs when the pivot extends obliquely and the frictional forces between the mirror foot and the mirror housing are relatively small during electric adjustment. These small frictional forces as such are desired, because cheaper electric motors can be utilized. However, jerky adjustment appears to lead to vibrations and the production of sound, and can make the use of the mirror during adjustment more difficult.

JP64-22646 discloses a mirror adjustment device according to the preamble of claim 1, wherein the assembly comprises a worm gear transmission, in which the worm it mounted slideably on a shaft between two spiral springs around the shaft. When the mirror rotation reaches a stop, a movable yoke with fingers on opposite ends of the worm is used to actuate switches under influence of displacement of the worm along the shaft.

DE 19513970 discloses a mirror assembly with a worm gear, wherein the bearing of one end of the worm shaft is mounted slideably in a recess of the housing and a spring, acting between the housing and the bearing, pushes the bearing towards the shaft.

WO0047445 discloses a mirror assembly wherein a spring plate applies a force on detent rollers. The mirror assembly has worm drives on either side of a motor. These worm drives engage secondary gears, which are mounted on shafts that also carry a drive worm. When the secondary gears are driven the shafts move to push the spring plate. This reduces the force on the detent rollers, which in turn allows gear wheels to rotate the mirror.

EP2055530 discloses a motor driven actuator with a worm gear. A spiral spring is used to move the bearing of the worm gear laterally with respect to the axial direction of the worm shaft.

It is, among others, an objective to prevent, at least in part, the experienced loose play upon manual adjustment.

It is an alternative objective of the invention to enable electric adjustment with smaller frictional forces, without this leading to problems of jerky movement.

According to one aspect of the invention, there is provided a mirror adjustment device according to claim 1.

The resilient element makes it possible to apply a bias to a worm shaft that forms a drive element that reduces play in the position of the drive element. This reduces the loose play that can be felt at the mirror housing upon manual adjustment. It also proves to prevent the judder issues.

The drive element is rotatable about an axial direction. In an embodiment, the drive element is bearing mounted in the bearing part via the resilient element, in an axially resilient manner. The drive element may comprise, for instance, a worm gear assembly, provided with a worm shaft having thereon a worm-shaped part and a worm gear part, wherein the bearing part forms a bearing surface of the worm shaft, and wherein the resilient element is received between a shaft end of the worm shaft and the bearing surface which is part of the bearing part. The bearing surface may for instance be an axial bearing surface, such as a bearing surface through which runs the continuation of the central rotation axis of the worm gear, or a bearing surface from where, via the resilient element, a force with an axial component is exerted on the worm shaft.

In an embodiment, the shaft end of the worm shaft is hollow and the resilient element extends from the bearing surface to the hollow shaft end, for instance along the continuation of the central rotation axis.

In a further embodiment, the resilient element comprises a spring, for instance a leaf spring, whereby the spring on one side is supported in the bearing part and on the other side forms a bearing of the shaft end of a worm shaft of the worm part, or is part of the bearing of the shaft end via a bearing race. The spring can be received at an oblique angle to the rotation axis of the worm shaft, between the worm shaft and a point of support, for instance as a helical spring conventional as such. In another embodiment, the resilient element is received, at least in part, in a hollow end of the worm shaft, or the resilient element presses against a projecting element on the worm shaft, such as the worm wheel.

Further advantageous embodiments are represented in the subclaims.

### Brief description of the figures

The invention will be further elucidated on the basis of an exemplary embodiment which is represented in the drawing. In the drawing:
Figs. 1A, 1B and 1C show a top plan view, and two front views, respectively, of an exterior mirror of a motor vehicle;
Fig. 2 shows a perspective view of a mirror adjustment device according to the state of the art;
Figs. 3A, 3B, 3C and 3D show a cross section and detailed views, respectively, of parts of a first embodiment of a mirror adjustment device and two variants thereon; and
Fig. 4 shows a cross section of parts of a second embodiment of a mirror adjustment device; and
Fig. 5 shows a cross section of parts of a third embodiment of a mirror adjustment device.

### Detailed description of exemplary embodiments

It is noted that the figures are merely schematic representations of preferred exemplary embodiments of the invention which is described by way of non-limitative exemplary embodiment. In the figures, identical or corresponding parts are represented with the same reference numerals.

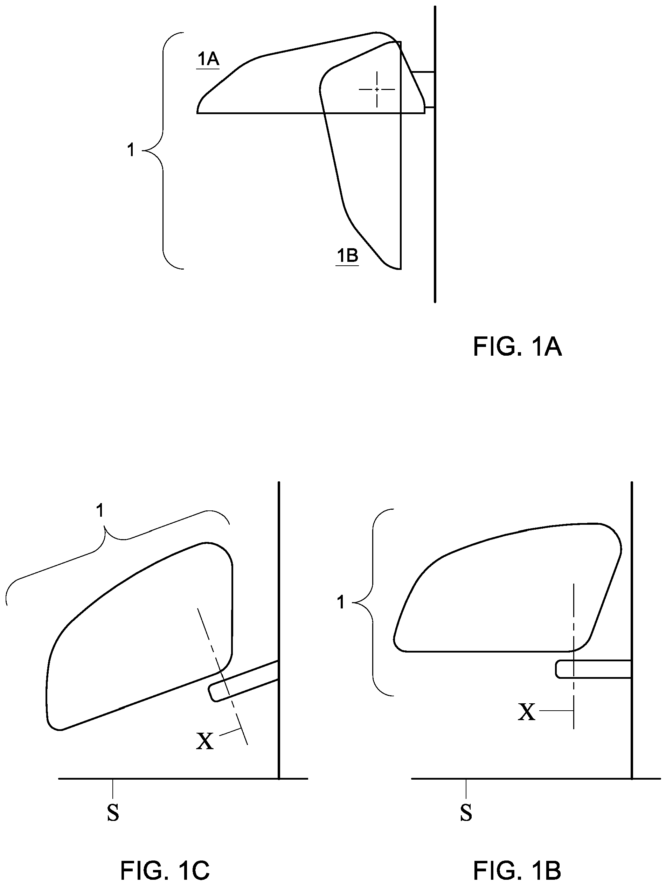

Figure 1A shows, in top plan view, an exterior mirror (1) with a mirror housing (1') and a mirror foot (1"), shown in a first, folded out position or driving position (1A) and a second, collapsed position (1B) or parking position. The mirror housing is coupled to the mirror foot in a manner rotatable about a pivot. The mirror foot is attached to the motor vehicle (not shown).

Fig. 1B shows, in front view, a mirror housing where the pivot (X) is substantially perpendicular to the base (S) of the vehicle, that is to say, the pivot (X) is substantially vertical when the base (S) is horizontal.

Fig. 1C shows, in front view, a mirror housing where, for instance for esthetic reasons, the pivot (X) is at an angle different from 90° (i.e. not perpendicular) to the base (S) of the vehicle.

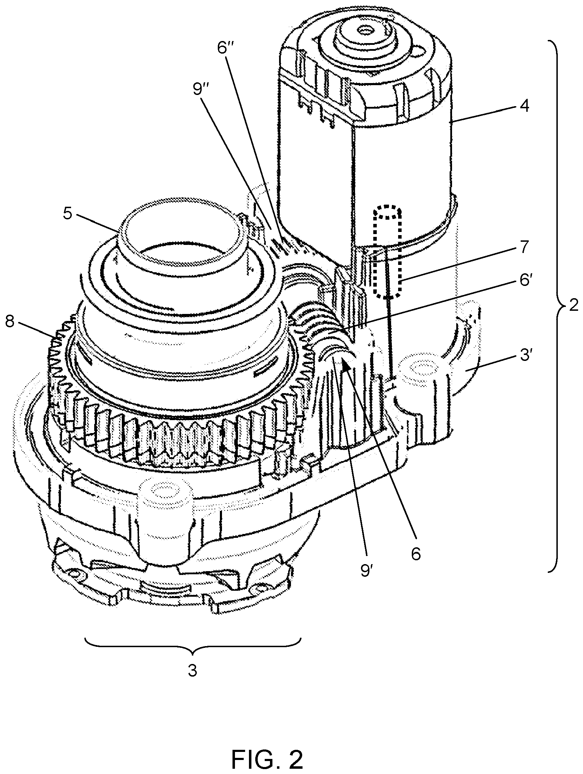

Fig. 2 shows an adjustment device for a mirror housing for motor vehicles according to the state of the art, comprising a housing (3) and a first bearing part (3'). The adjustment device can further comprise a hood-shaped second bearing part (not shown). The first bearing part (3') is included in the housing (3). Herein, "housing" is understood to mean a structure on which different parts of the adjustment device are supported, that is, a structure having bearing parts for therein supporting rotatable parts of the adjustment device. The parts can be wholly or partly retained in the housing. In addition to the housing, the adjustment device comprises an electric motor (4), a worm gear assembly (6) and an output gear (8).

The electric motor (4) can comprise a motor worm (not represented). The worm gear assembly (6) comprises a worm shaft having thereon a worm gear part (6") and a worm-shaped part (6'). The worm gear part (6") is in engagement with the motor worm, or another gear driven by the electric motor (4). The worm shaft and the worm-shaped part (6') can be integrally formed, with the worm-shaped part comprising a spiral groove. Worm gear part (6") may be provided on the worm shaft, or be integrally formed with the worm shaft.

Output gear (8) is in engagement with the worm-shaped part (6') of the worm gear assembly (6) by means of a disengageable, rotational coupling (not shown). The disengageable rotational coupling comprises for instance a locking which couples output gear (8) to the pivot, which locking, above a predetermined force on the output gear (8), is pressed sideways, so that the locking is canceled. Output gear (8) is further connected with the pivot (5).

The worm gear assembly (6) is axially and radially bearing mounted in the first bearing part 3' by means of two bearing races (9') and (9") around respective worm gear assembly ends. In a preferred embodiment, bearing races are barrel-shaped and designed in a suitable material, such as for instance bronze, and serve for radially and axially bearing mounting the worm gear assembly ends in the bearing part. Axial and radial forces that occur are thereby transmitted to the bearing part, while rotation is minimally inhibited. However, it will be clear to the skilled person that other implementations are also conceivable, such as deep groove ball thrust bearings, needle bearings, slide bearings or a combination of such bearing forms. The worm gear assembly can also be bearing mounted in the first, the second or in both bearing parts without interposition of the bearing races.

Preferably, the housing is fixedly coupled to the mirror housing, and the mirror foot is coupled via the pivot to output gear (8). Conversely, the housing can be coupled to the mirror foot and, via the worm gear assembly (6) and the output gear, to the pivot.

In operation, a rotational movement of electric motor (4) is transmitted to the worm-shaped part (6') of the worm gear assembly (6). In turn, the worm-shaped part (6') transmits the rotational movement to output gear (8), whereby the mirror housing and the mirror foot are rotated relative to each other about the pivot.

Upon manual adjustment of the mirror, the user moves the mirror housing, and thus worm gear assembly (6). Upon manual adjustment, initially, the output gear is secured against rotation relative to the housing by means of the worm-shaped part of the worm gear assembly. Upon manual adjustment, the disengageable rotation coupling, which is known per se, releases the output gear (8) from the pivot (5) when the transmitted torque exceeds a threshold. A disengageable rotation coupling can for instance be designed to uncouple at a torque of 10 Newton meter. As the diameter of the shafts is at best a few centimeters, this threshold corresponds to forces of 500 Newton or more, and preferably at least 100 Newton. In the alternative where the housing is fixedly coupled to the mirror foot, and the mirror housing via the pivot to the output gear (8), the user, upon manual adjustment, moves the output gear via the pivot (5) and uncoupling occurs in a comparable manner.

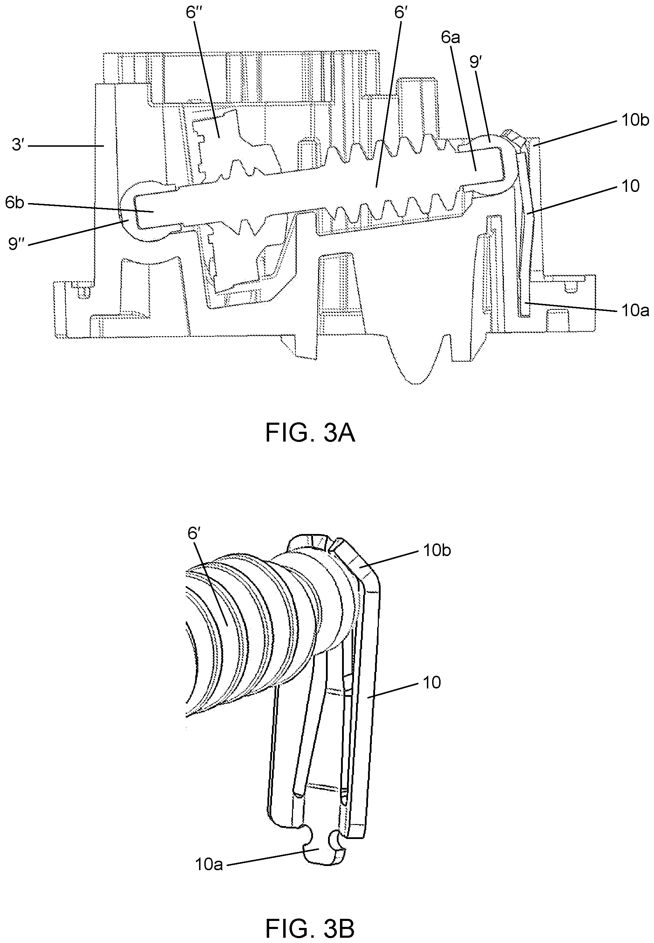

Fig. 3A shows a cross section of the embodiment of the adjustment device according to a first preferred embodiment. Here, a clip-shaped resilient element (10) is received in a bearing part (3') of the housing (3). Figure 3B shows this in more detail. The clip-shaped resilient element (10) may for instance be a leaf spring. Bearing race (9') is axially slidably received in bearing part (3'). A first end (10a) of the clip-shaped resilient element (10) bears against the bearing part (for instance in that resilient element (10) is fixed in the bearing part (3')), and a second end (10b) of the clip-shaped element (10) secures the bearing race (9') axially in the bearing part. Between the first end (10a) and second end (10b) there is a suitably selected spring travel, so that the bearing race (9') is axially secured under a bias in the bearing part (3').

During the life span of the adjustment device (2), wear, relaxation or creep can cause the bearing races (9') and (9") to build up axial play. Play can for instance be a result of the fact that the surfaces of abutment of the bearing races (9') and (9") in the bearing part (3') recede, or wear of the bearing races themselves, or, for instance, wear of the shaft ends (6a) or (6b) of the worm gear assembly (6).

For normal motor-driven operation of the mirror adjustment device, this play, as such, is no hindrance. The electric motor presses the play away, certainly so when the mirror adjustment device is configured for switching off the current to the electric motor only when the rotation strikes against a stop. But upon manual adjustment of the mirror housing, the user, without resilient element (10), feels loose play in that manual movement, due to the axial play of the bearing races or bearing, initially leads to axial movement of the worm gear assembly (6). Resilient element (10) suppresses this effect, or at least reduces it.

Also, upon motor adjustment of the mirror housing, judder (a (slightly) jerky movement of the mirror housing) can occur in that a component of gravity and friction alternately prevail, if friction is small, so that the transmission can periodically come to a standstill. This leads to the jerky movement (judder). For the end use as a mirror, this is no hindrance, because the mirror in use is fixed. But the resilient element (10) appears to solve problems of judder in terms of vibrations, sound production and reduced usability of the mirror during adjustment. The resilient element (10) prevents the worm gear assembly (6) from falling back within the range of play upon force variations.

In the embodiment shown, the spring travel of the resilient element (10) ensures that the play is not sensed as such a "loose" play, but that the play is always pressed away axially, in that there will always be an axial bias between, on one side, worm gear assembly (10) and bearing races (9') and (9") and, on the other side, the bearing part (3'). The spring travel is designed such that an axial bias is generated so that the play cannot be sensed as loose play. In an embodiment, a spring force of 10 Newton is transmitted, less than required for the threshold torque at which the disengageable rotation coupling uncouples, and preferably at least 10 Newton, and more preferably at least 12 Newton.

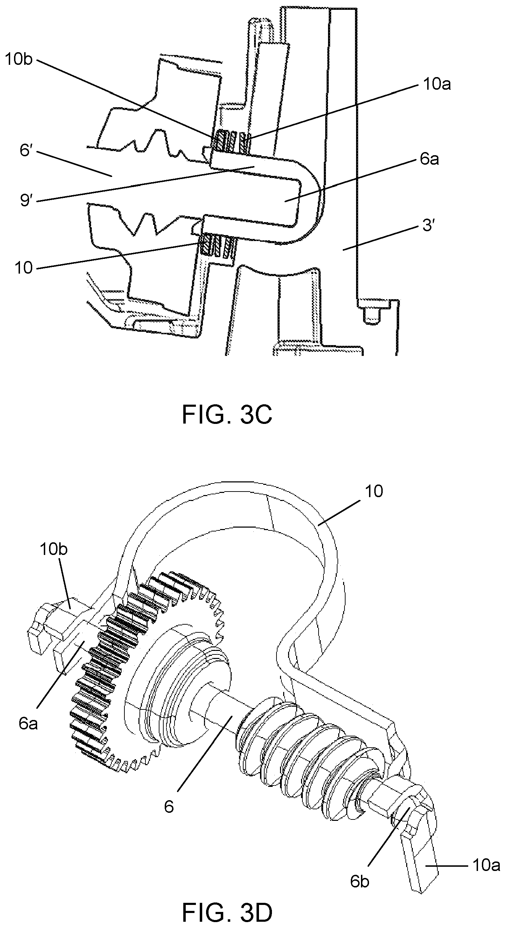

In other embodiments of the adjustment device, the resilient element can also have a different shape, such as, for instance, the shape of a spiral spring, a helical spring or a wave spring, as represented in Figure 3C.

Instead of the leaf spring of Figure 3B, a spring (for instance a helical spring) can be used that extends at an oblique angle to the central rotation axis, running between the worm shaft and a bearing surface that is not around the continuation of the central rotation axis of the worm shaft, but radially displaced relative to this continuation. For instance, a spring at an angle of between 20° and 70° to the central rotation axis can provide sufficient effect. Compared to the spring in the embodiment shown in Fig. 3C, the spring in this case does not extend axially between the worm shaft and a bearing surface around the continuation of the central rotation axis of the worm shaft, but from the worm shaft to a point of support that is radially displaced relative to this continuation. As a result, less space along the central axis can be necessary and/or an oblique pressure force can be exerted.

A further variant of an implementation of the resilient element is shown in Fig. 3D. Here, the resilient element (10) has the shape of a sickle, that is to say, in succession an axial part and a curved part, of which the axial part or the end (10a) thereof is fixedly connected to the bearing part (not shown). In another embodiment, the end (10b) of the curved part is fixedly connected to the bearing part. The worm gear assembly ends (6a) and (6b) are clamped between the first and second ends (10a) and (10b). An additional advantage of the variant shown in Fig. 3D is that with a suitable design of the ends (10a) and (10b), the bearing races can be omitted, which reduces the costs of the adjustment device.

Further variants are possible. For instance, use can be made of a rubber plug as resilient element. It is even conceivable that the bearing part (3') is designed wholly or partly in a resilient material having the desired properties. The resilient part and the bearing part can be integrally formed, for instance made by means of a (two-component) injection molding technique.

While a configuration of the adjustment device is shown with no more than one resilient element, it should be noted that the adjustment device can also comprise several resilient elements. Use of no more than one resilient element has the advantage that the costs of the adjustment device can be reduced further. Different resilient elements can keep different parts of the gear transmission tensioned. This could compensate for a larger extent of play. In configurations of the adjustment device with several resilient elements, for instance, both bearing races (9') and (9") can be axially secured in the bearing part (3') by means of resilient elements. Play occurring as a result of, for instance, wear, is then compensated by an axial displacement of both bearing races. As a result, a larger extent of play could be compensated for than through displacement under spring force of one bearing race.

In an embodiment, the resilient element (10) secures, or the resilient elements secure, the worm gear assembly ends (6a) and (6b) directly in the bearing part (3'). The bearing races (9') and (9") can be omitted.

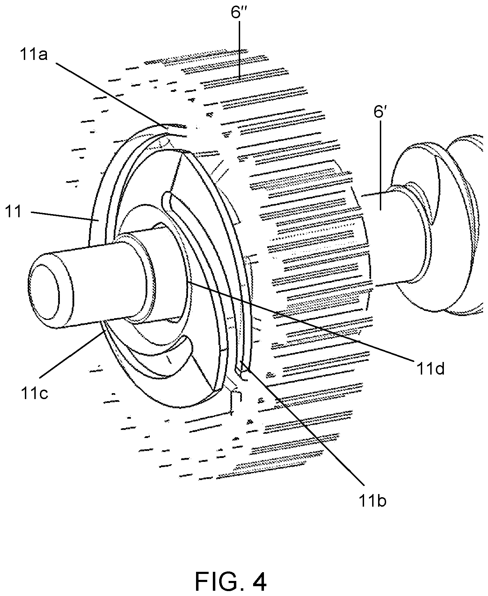

Fig. 4 shows a second embodiment of the adjustment device. In this embodiment, a resilient element in the form of a Belleville spring (11) is included in the worm gear assembly (6). On one side, the Belleville spring is supported directly or indirectly against the bearing part (not shown). On the other side, the Belleville spring (11) indirectly exerts a pressure against the worm shaft of the worm gear assembly (6), in the example shown via worm gear part (6") in the form of a gear on the worm shaft. In another embodiment, the pressure can be exerted via another projection on the worm shaft, such as a disc especially provided to that end. Preferably, the Belleville spring is designed with three or more resilient arms (11a), (11b), (11c) which secure the Belleville spring against rotation in the worm gear part(6"), while the Belleville spring is supported by bearing surface (11d) against the bearing race (not shown) or directly against an axial bearing surface of the bearing part.

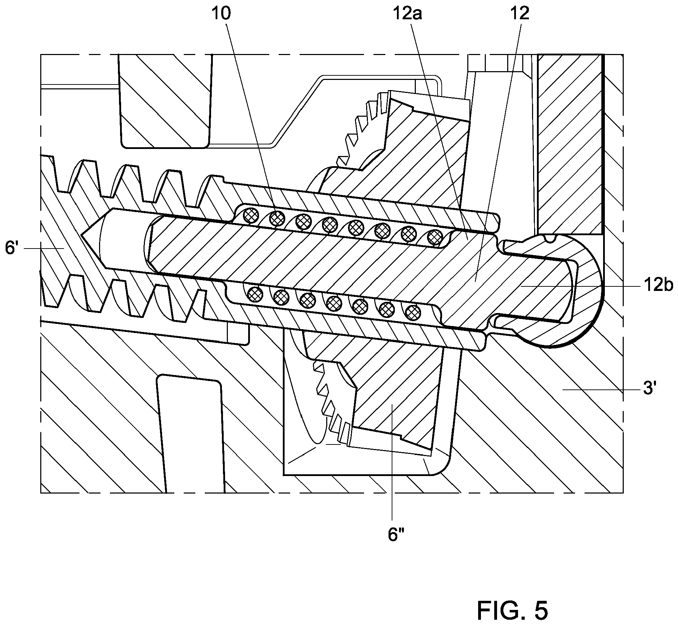

Fig. 5 illustrates a third embodiment, in which the resilient element (10) is received completely in the worm gear assembly (6), more specifically in the worm shaft with the worm part (6"). The end of the worm shaft is hollow. In the hollow end of the worm shaft, a spring and a shaft-shaped additional pressure part (12) are concentrically received. While a preferred embodiment is shown in which the spring is located completely in the cavity, in a different embodiment, the spring can project partly outside the cavity.

The shaft-shaped additional pressure part (12) has a first bearing surface (12a) and a second bearing surface (12b). The spring is received between the first bearing surface (12a) and the worm part (6'), with spring action between the first bearing surface (12a) and the worm part (6'). The second bearing surface (12b), so to speak, takes the place of the worm assembly end, for instance in the bearing race in the housing. As a result, the shaft-shaped additional pressure part (12) is axially pressed out under spring action of the resilient element (10). As more play occurs, the additional pressure part (12) will move axially as a result of the spring action, thereby compensating the play. In this embodiment, the resilient element (10) is preferably designed as a helical spring but other types of springs are also possible. In the embodiment shown, the worm gear part (6") is fixedly connected to the worm shaft. In another embodiment, the worm gear part (6") can be part of the additional pressure part. In this embodiment, preferably, a locking is provided which locks the worm shaft rotationally to the additional pressure part but allows axial movement. The additional pressure part may for instance be provided with a carrier cam and the worm shaft with an axial slot in which the cam fits.

The invention is not limited to the exemplary embodiments represented here. Many variants are possible. For instance, a resilient element can also be utilized in other places, for instance between a motor worm by which motor movement is transmitted to the worm gear assembly (6), and one of the bearing parts. In this embodiment, the motor worm is axially movable but connected in a rotation-locked manner to the output shaft of the electric motor.

In another embodiment of the adjustment device, the output gear comprises a first and a second part, the first part being in engagement with the worm part of the worm gear assembly, and the second part being disengageably rotation-locked with the pivot. In this embodiment, both parts are axially concentrically bearing-mounted and mutually rotation-locked by means of a spring travel provided with a resilient element. Such a construction, with mutually rotatable parts coupled via a resilient element, can alternatively also be used elsewhere, for instance on the worm gear, with the first part being, for instance, the worm gear, and the second part coupling the worm gear to the worm shaft.

Such variants are also are understood to fall within the scope of the invention as represented in the following claims.

## Claims

1. A mirror adjustment device with a pivot (5) for relative adjustment of a mirror housing (3) and a mirror foot (1") which are coupled to each other via the pivot (5) in a manner rotatable relative to each other, which mirror adjustment device comprises:
- a housing (3) comprising a bearing part (3');
- an electric motor (4);
- a worm gear assembly for transmitting rotation of the electric motor (4) to the pivot (5), the worm gear assembly being provided with a worm shaft having thereon a worm part (6') and a worm gear part (6"), the bearing part forming an axial bearing surface of the worm shaft, the worm gear (6") being connected to the pivot;
**characterized in that** the worm gear assembly is provided with a resilient element (10) having the shape of a sickle **in that** it comprises successively an axial part and a curved part, at least a part of the axial part or an end (10b) of the curved part being fixedly connected with the bearing part (3'), and opposite ends (6a,b) of the worm shaft are clamped between ends (10a, b) of the resilient element (10) at the axial part and the curved part.

2. A mirror adjustment device according to claim 1, wherein at the least a part of the axial part is fixedly connected with the bearing part (3').

3. A mirror adjustment device according to claim 2, wherein an end (10a) of the resilient element (10) at the axial part is fixedly connected with the bearing part (3').

4. A mirror adjustment device according to claim 1, wherein an end (10b) of the resilient element (10) at the curved part is fixedly connected with the bearing part (3').

5. An adjustable mirror provided with a mirror housing (1") and a mirror foot coupled via a pivot (5), provided with a mirror adjustment device according to any one of the preceding claims.

## Patentansprüche

1. Spiegeleinstellungsvorrichtung mit einem Zapfen (5) zum relativen Einstellen eines Spiegelgehäuses (3) und eines Spiegelfußes (1"), die über den Zapfen (5) so miteinander verbunden sind, dass sie zueinander schwenkbar sind, welche Spiegeleinstellungsvorrichtung Folgendes umfasst:
- ein Gehäuse (3), umfassend ein Lagerteil (3');
- einen Elektromotor (4);
- eine Schneckenradanordnung zum Übertragen der Drehung des Elektromotors (4) auf den Zapfen (5), welche Schneckenradanordnung mit einer Schneckenwelle (6') und einem Schneckenradteil (6") versehen ist, welches Lagerteil eine axiale Lagerfläche der Schneckenwelle bildet, welches Schneckenrad (6") mit dem Zapfen verbunden ist;
**dadurch gekennzeichnet, dass** die Schneckenradanordnung mit einem elastischen Element (10) in Form einer Sichel versehen ist, dass es nacheinander ein axiales Teil und ein gebogenes Teil umfasst, wobei mindestens ein Teil des axialen Teils oder ein Ende (10b) des gebogenen Teils fest mit dem Lagerteil (3') verbunden ist und gegenüberliegende Enden (6a,b) der Schneckenwelle zwischen Enden (10a, b) des elastischen Elements (10) an dem axialen Teil und dem gebogenen Teil geklemmt sind.

2. Spiegeleinstellungsvorrichtung nach Anspruch 1, wobei mindestens ein Teil des axialen Teils fest mit dem Lagerteil (3') verbunden ist.

3. Spiegeleinstellungsvorrichtung nach Anspruch 2, wobei ein Ende (10a) des elastischen Elements (10) an dem axialen Teil fest mit dem Lagerteil (3') verbunden ist.

4. Spiegeleinstellungsvorrichtung nach Anspruch 1, wobei ein Ende (10b) des elastischen Elements (10) an dem gebogenen Teil fest mit dem Lagerteil (3') verbunden ist.

5. Einstellbarer Spiegel, versehen mit einem Spiegelgehäuse (1") und einem Spiegelfuß, gekoppelt über einen Zapfen (5), versehen mit einer Spiegeleinstellungsvorrichtung nach einem der vorhergehenden Ansprüche.

## Revendications

1. Dispositif de réglage de miroir avec un pivot (5) pour le réglage relatif d'un logement de miroir (3) et d'un pied de miroir (1") qui sont couplés l'un à l'autre via le pivot (5) de manière rotative l'un par rapport à l'autre, lequel dispositif de réglage de miroir comprend :
- un logement (3) comprenant une partie palier (3') ;
- un moteur électrique (4) ;
- un ensemble engrenage à vis sans fin pour la transmission de la rotation du moteur électrique (4) au pivot (5), l'ensemble engrenage à vis sans fin étant doté d'un arbre à vis sans fin ayant sur celui-ci une partie vis sans fin (6') et une partie engrenage à vis sans fin (6"), la partie palier formant une surface de palier axiale de l'arbre à vis sans fin, l'engrenage à vis sans fin (6") étant relié au pivot ;
**caractérisé en ce que** l'ensemble engrenage à vis sans fin est doté d'un élément résilient (10) ayant la forme d'une faucille **en ce qu'**il comprend successivement une partie axiale et une partie courbe, au moins une partie de la partie axiale ou une extrémité (10b) de la partie courbe étant reliée fixement à la partie palier (3'), et des extrémités opposées (6a, b) de l'arbre à vis sans fin sont serrées entre des extrémités (10a, b) de l'élément résilient (10) au niveau de la partie axiale et de la partie courbe.

2. Dispositif de réglage de miroir selon la revendication 1, dans lequel au moins une partie de la partie axiale est reliée fixement à la partie palier (3').

3. Dispositif de réglage de miroir selon la revendication 2, dans lequel une extrémité (10a) de l'élément résilient (10) au niveau de la partie axiale est reliée fixement à la partie palier (3').

4. Dispositif de réglage de miroir selon la revendication 1, dans lequel une extrémité (10b) de l'élément résilient (10) au niveau de la partie courbe est reliée fixement à la partie palier (3').

5. Miroir réglable doté d'un logement de miroir (1") et d'un pied de miroir couplé via un pivot (5), doté d'un dispositif de réglage de miroir selon l'une quelconque des revendications précédentes.
